# EUROPEAN PATENT SPECIFICATION

(11) **EP 1 111 162 B1**
(45) Date of publication and mention of the grant of the patent: **21.07.2004**
(21) Application number: 99940604.4
(22) Date of filing: 01.09.1999
(51) Int. Cl.: E04H 9/02, E04B 2/56

(54) **VISCOSITY SYSTEM DAMPING WALL MOUNTING STRUCTURE AND MOUNTING METHOD**
MONTAGEKONSTRUKTION UND -VERFAHREN FÜR EINE DÄMPFUNGSWAND MIT VISKOSITÄTSSYSTEM
STRUCTURE DE MONTAGE POUR PAROI D'AMORTISSEMENT A SYSTEME DE VISCOSITE ET PROCEDE DE MONTAGE Y RELATIF

(30) Priority: 01.09.1998 JP 24736798
(43) Date of publication of application: 27.06.2001
(73) Proprietor: SHIMIZU CORPORATION, Tokyo 105-8007 (JP)
(72) Inventor: ISODA, Kazuhiko, Tokyo 105-8007 (JP)
(74) Representative: Senior, Alan Murray
(86) International application number: PCT/JP1999/004738
(87) International publication number: WO 2000/012843

(56) References cited:
- JP-A- 8 338 153
- JP-A- 9 310 531
- JP-A- 10 046 865
- JP-A- 10 220 063
- JP-A- 59 052 069

## Description

### TECHNICAL FIELD

The present invention relates to a structure for installing a viscous vibration-damping wall and a method of installing the same, and more particularly to a structure for installing a viscous vibration-damping wall whose connecting structure is simple and which, while possessing a sufficient withstanding force, can be manufactured at low cost by making improvements on the structure for installing the viscous vibration-damping wall on a main frame structure, as well as a method of installing the same.

### BACKGROUND ART

Measures for enhancing the damping performance of structures have been adopted since ancient times to enhance the safety of earthquake resistance of building structures and improve the dwelling ability of structures against the wind and other dynamic external forces. As specific solutions therefor, viscous vibration-damping walls have been put to practical use, and the number of the viscous vibration-damping walls actually adopted has been on an increasing trend in recent years.

The viscous vibration-damping wall is constructed such that an upper-end open housing, which is formed by a pair of steel-made side plates mounted on a base plate and a pair of flange plates disposed on both sides of the pair of side plates, is integrated with a lower-floor girder, an intermediate plate integrated with an upper-floor girder is inserted in it, and a viscous material or a viscoelastic material is placed in the gap therebetween with a predetermined thickness.

To build the vibration-damping wall, connection to a main frame structure is required, but under the present circumstances connection metal plates from the main frame structure for connection to the viscous vibration-damping wall include a large number rib plates and make the joints complex, constituting a factor for higher cost.

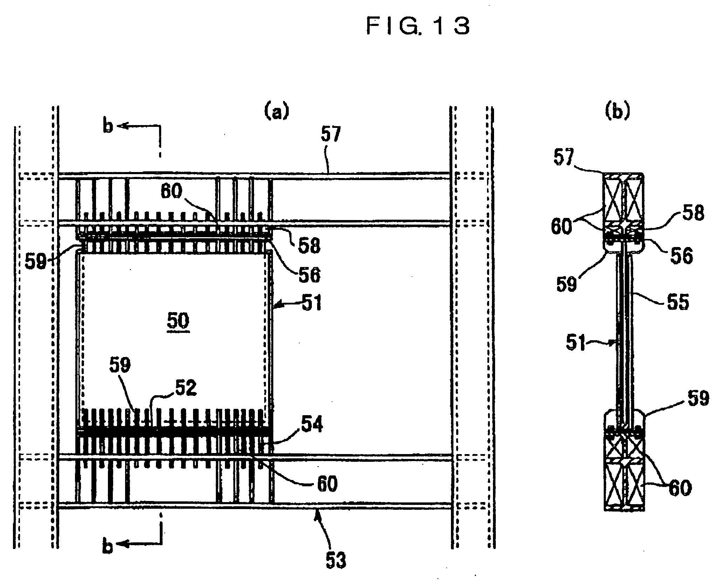

Referring to Fig. 13, a description will be given of the connection between a conventional viscous vibration-damping wall and the main frame structure. A base plate 52 of a housing 51 making up a vibration-damping wall 50 is bolted to a flange surface of a rising metal plate 54 disposed on a lower-floor girder 53, while an intermediate plate 55 of the vibration-damping wall has a top plate 56 welded to its tip portion and is bolted to a flange surface of a mounting plate 58 disposed on an upper-floor girder 57.

In this state, when the vibration-damping wall 50 bears a horizontal force due to an external force, bending moment due to the borne shearing force occurs in the top plate 56 and the base plate 52 at the upper and lower ends.

The stress applied to the joints acts as the horizontal shearing force with respect to the bolts at the plane of connection, and at the same time a vertical axial force which is distributed widely at the edge portions of the vibration-damping wall 50 occurs in the bolts at the plane of connection due to the bending moment. As a result, large bending stresses occur in the top plate 56 and the base plate 52 having bolt hole portions arranged horizontally, so that it is necessary to adopt countermeasures for the respective plates.

Consequently, as shown in the drawing, a multiplicity of vertical rib plates 59 and 60 are fixed to the base plate 52 and the top plate 56 as well as the rising metal plate 54 and the mounting plate 58 corresponding thereto, and large-scale reinforcement is provided particularly at the edge portions of the vibration-damping wall. This results in an enormously large increase in cost, and constitutes a hindrance to the connection to a member perpendicular to a girder, and to through holes of sleeves of the facility.

Since the damping performance which can be added to a structure is proportional to the quantity of vibration-damping walls that are installed, it is desirable to adopt a large number of vibration-damping walls. However, since the cost required in the installation is also proportional to the quantity used, it is an important problem to reduce the cost of the building construction of the vibration-damping walls and to prevent adverse effects from being exerted on other execution of works.

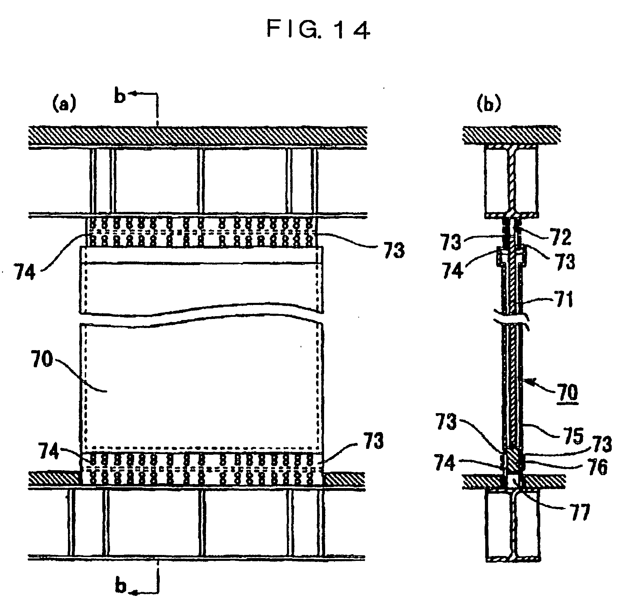

To overcome this problem, as shown in Fig. 14, a method of building construction has been proposed in which all the upper and lower flange portions are removed. (Refer to JP-A-10-46865)

In this proposal, as shown in the drawing, a bolting steel plate 72 is provided which has the same thickness as an inner wall steel plate 71 of a vibration-damping wall 70 to be fixed to the underside of an upper-floor girder or a reinforced portion thereof, and the inner wall steel plate 71 of the vibration-damping wall is disposed immediately therebelow. A pair of bolting reinforcing plates 73 are disposed on both sides of the inner wall steel plate 71, and the three steel plates are tightened by high-strength bolts 74 so as to be integrated.

In addition, on a lower floor side, a bolting lower steel plate 76 is welded in advance to lower sides of a pair of outer wall steel plates 75 of the vibration-damping wall, and a steel plate 77 of the same thickness as the bolting lower steel plate 76 is provided on a lower-floor girder, and is integrated therewith in the same way as the upper side.

An assertion is made that it is possible to substantially reduce the cost required for the overall building construction of the vibration-damping wall, since the mechanism for transmitting the stress can be rationalized and the fabrication of the vibration-damping wall itself and the fixing portions can be both simplified by virtue of the construction in which flanged connection in each of the upper and lower portions is eliminated, as described above.

However, with the vibration-damping wall according to this proposal, the vibration-damping wall itself is specially provided with the bolting lower steel plate, the inner wall steel plate is provided with an upper reinforced portion, and the friction-type high-strength bolted connection for jointing adopts a structure in which a multiplicity of bolts are arranged on end portion sides of the vibration-damping wall. Such a construction is a natural consequence of the fact that the bolting lower steel plate and the inner wall steel plate need to simultaneously withstand both the shearing force and the tensile force with respect to the bending moment occurring in the vibration-damping wall. A substantial thickness must be inevitably secured for the bolting lower steel plate, so that the cost of the vibration-damping wall itself is not much different from other conventional vibration-damping walls.

In addition, concerning the handling of the vibration-damping wall, since the structure adopted is such that the vibration-damping wall cannot be self-supported, special attention is required for safety and workability under the circumstances of transportation, storage, and on-site setting.

The present invention provides a structure for installing a viscous vibration-damping wall which is simple while possessing a sufficient withstanding force, and which can be manufactured at low cost by making improvements on the structure for connection at the time of installing the viscous vibration-damping wall on a main frame structure, as well as a method of installing the same.

JP-A-10 46865 is the basis for the features pre-characterising part of claim 1.

JP-A-09 310 531 also discloses prior art which is relevant to the present invention.

### DISCLOSURE OF INVENTION

According to the invention there is provided a structure for installing a viscous vibration-damping wall according to claim 1.

Preferred features of the invention are described in dependent claims 2-12.

The invention also provides a method of installing such a structure according to claim 13.

Hereafter, a description will be given of the embodiments of the present invention with reference to the drawings.

### BRIEF DESCRIPTION OF DRAWINGS

Fig. 1 is a diagram of a state in which a viscous vibration-damping wall in accordance with the invention is installed on a main frame structure;
Fig. 2 is a cross-sectional view of various portions of the viscous vibration-damping wall in accordance with the invention;
Fig. 3 is a perspective view of the viscous vibration-damping wall in accordance with the invention;
Fig. 4 is a diagram of a state in which the viscous vibration-damping wall is fixed to an upper-floor girder;
Fig. 5 is a diagram of another state in which the viscous vibration-damping wall is fixed to the upper-floor girder;
Fig. 6 is an exploded view of installation of the viscous vibration-damping wall in accordance with the invention;
Fig. 7 is a diagram of a state in which another viscous vibration-damping wall in accordance with the invention is installed on the main frame structure;
Fig. 8 is a cross-sectional view of various portions of the other viscous vibration-damping wall in accordance with the invention;
Fig. 9 is a diagram of a state in which still another viscous vibration-damping wall in accordance with the invention is installed on the main frame structure;
Fig. 10 is a cross-sectional view of various portions of the other viscous vibration-damping wall in accordance with the invention;
Fig. 11 is a diagram of a state of installation in which a plurality of viscous vibration-damping walls are installed in a juxtaposed manner on the main frame structure in accordance with the invention;
Fig. 12 is a diagram of another state of installation in which a plurality of viscous vibration-damping walls are juxtaposed;
Fig. 13 is a diagram of a state of the conventional installation of a viscous vibration-damping wall; and
Fig. 14 is a diagram of another state of the conventional installation of a viscous vibration-damping wall.

### EMBODIMENTS

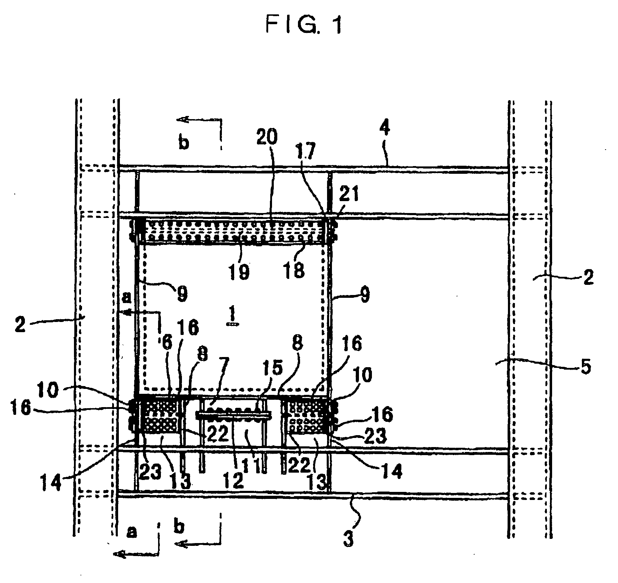

Fig. 1 is an elevational view of a state in which a viscous vibration-damping wall in accordance with the invention is installed on a main frame structure.

A viscous vibration-damping wall 1 is disposed in a plane of structure 5 which is formed by a pair of pillars 2, a lower-floor girder 3, and an upper-floor girder 4, and is joined to the lower-floor girder 3 and the upper-floor girder 4, respectively.

At a lower end of the viscous vibration-damping wall 1, a joining member 7 is attached to a central portion of a base plate 6 and is provided with high-strength bolt hole portions, and a pair of second gusset plates 8 are suspended in the same direction as that of an intermediate plate from the base plate 6 at positions close to side end portions of the viscous vibration-damping wall 1 on both sides of the joining member 7. The length of the second gusset plates 8 is set to be a dimension shorter than that of the joining member 7, and the arrangement provided is such that the self-weight of the viscous vibration-damping wall is received by the joining member 7 formed integrally with the base plate.

In addition, a pair of third gusset plates 10 having the same length as the second gusset plates 8 are also suspended orthogonally from a pair of flange plates 9, respectively.

Although the viscous vibration-damping wall 1 may be directly mounted on the lower-floor girder 3 provided with base-plate connecting hole portions and embedded gusset plates, in this embodiment a description will be given of the viscous vibration-damping wall which is provided with a rising metal plate for the reason which will be described later.

A flat plate 12 corresponding to the joining member 7 of the viscous vibration-damping wall 1 is welded to a rising metal plate 11 welded to a flange surface of the lower-floor girder 3, and is provided with high-strength bolt hole portions for connection to the joining member.

A pair of fourth gusset plates 13 opposing the second gusset plates 8 suspended from the base plate 6 as well as a pair of fifth gusset plates 14 opposing the third gusset plates 10 suspended from the flange plates 9 are embedded on both sides of the rising metal plate 11.

The rising metal plate 11 is adopted to set the working plane for the friction-type high-strength bolted connection of the viscous vibration-damping wall 1 on a floor slab without damaging the base material of the lower-floor girder 3 by bolt holes and the like. The adoption of the rising metal plate 11 has an advantage in that when the need has arisen to replace the viscous vibration-damping wall 1, the replacement work is facilitated.

The viscous vibration-damping wall 1 is mounted on the rising metal plate 11, and the joining member 7 of the viscous vibration-damping wall and the rising metal plate 11 are frictionally connected at 15 in one plane by high-strength bolts 10. Similarly, the second gusset plates 8 provided on the base plate 6 on both sides of the joining member 7 as well as the third gusset plates 10 provided on the flange plates 9 are respectively connected to the opposing fourth and fifth gusset plates 13 and 14 provided on the lower-floor girder by two-plane friction-type high-strength bolted connection 16 using pairs of splicing plates, thereby integrally joining the viscous vibration-damping wall 1 and the lower-floor girder 3.

The aforementioned direct connection between the gusset plates does not necessarily require the splicing plates.

In the case of the connection between the second gusset plate 8 and the fourth gusset plate 13, if welding positions of the two gusset plates are offset in advance from the center of the viscous vibration-damping wall and the center of the web of the lower-floor girder such that the center of the web of the lower-floor girder and the center of the viscous vibration-damping wall are aligned with each other, the second gusset plate 8 and the fourth gusset plate 13 can be directly connected by one-plane friction-type high-strength bolted connection.

Similarly, in the case of the connection between the third gusset plate 10 and the fifth gusset plate 14, if the fifth gusset plate 14 is embedded in the lower-floor girder 3 so that the surface of the fifth gusset plate 14 is located at such a position that it can be brought into surface contact with either surface of the gusset plate 10, the third gusset plate 10 and the fifth gusset plate 14 can be directly connected by one-plane friction-type high-strength bolted connection.

The adoption of this one-plane friction-type connection contributes to the reduction of the cost since the splicing plates are disused.

The gusset plates provided in various portions process as the shearing force of the high-strength bolts the bending moment occurring due to the shearing force which is borne by the viscous vibration-damping wall 1 during an earthquake, by making use of the fact that the bending moment is converted to vertical force at the portions on both sides of the viscous vibration-damping wall, thereby suppressing and damping the lifting force of the base plate and the vertical force occurring substantially in edge portions of the viscous vibration-damping wall.

Accordingly, the connection between the joining member 7 of the viscous vibration-damping wall 1 and the rising metal plate 11 is of the base plate type in the same way as the conventional art. However, since the joining member 7 and the rising metal plate 11 are located at a central portion of the viscous vibration-damping wall 1, tension members concerning the bending moment becomes small, and the tensile force does not occur in the connection bolts unlike the conventional viscous vibration-damping wall, so that there is no need for the reinforcing rib plates and a simple state of connection with a small thickness is sufficient.

In addition, since the connection of the gusset plates for joining both end portions of the viscous vibration-damping wall is also direct connection based on two-plane friction-type high-strength bolted connection using the splicing plates, the vertical force based on the bending moment is rationally processed without causing the tensile force to occur in the high-strength bolts for connection, and it is possible to cope with the vertical force with a simple connecting structure for which the reinforcing rib plates and the like are not required.

A first gusset plate 17 is attached by welding to a lower flange surface of the upper-floor girder 4 in alignment with the web of the girder.

In order to be directly connected to the aforementioned first gusset plate 17, an intermediate plate 18 of the viscous vibration-damping wall 1 is clamped together with the first gusset plate 17 by two splicing plates 19, and is thereby subjected to two-plane friction-type high-strength bolted connection 20. Further, at both end portions of the first gusset plate 17 and the intermediate plate 18, each of a pair of flange plates 21 of the first gusset plate 17 and each of a pair of flange plates provided on the intermediate plate 18 are clamped by two splicing plates, and are firmly connected to each other by being frictionally connected in two planes by the high-strength bolts. The viscous vibration-damping wall 1 and the upper-floor girder 4 are thus integrally joined.

In the direct connection between the first gusset plate 17 and the intermediate plate 18, since a top plate provided on a conventional intermediate plate and brackets suspended from the upper-floor girder are eliminated, the height of the viscous vibration-damping wall can be made large, and the shear area of the viscous vibration-damping material is increased, thereby making it possible to improve the damping performance.

It should be noted that the pair of flange plates provided at both ends of the intermediate plate 18 in a direction perpendicular to the girder web of the upper-floor girder are provided with bolt hole portions for attaching temporary suspending pieces which will be described later.

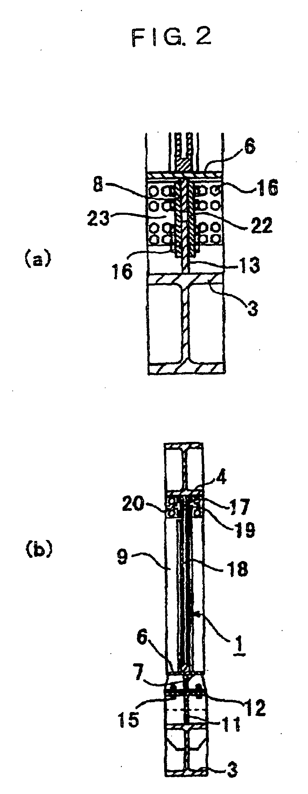

Fig. 2 is a cross-sectional view of various portions in a state in which the viscous vibration-damping wall is installed on the main frame structure.

Fig. 2(a) is a partial cross-sectional view taken in the direction of arrows a - a in Fig. 1, and illustrates the state of connection between, on the one hand, the lower-floor girder and, on the other hand, the gusset plates disposed on both end portions of the base plate and the gusset plates suspended from the flange plates in the viscous vibration-damping wall.

The second gusset plate 8 suspended from the base plate and the fourth gusset plate 13 embedded in the lower-floor girder are directly connected by the two-plane friction-type high-strength bolted connection 16 using splicing plates 22, as shown in the drawing.

Similarly, each splicing plate 23 shown in elevation is used for the two-plane friction-type high-strength bolted connection 16 adopted for the direct connection between the third gusset plate 10 suspended from the flange plate 9 arranged on each side of the viscous vibration-damping wall 1 and the fifth gusset plate 14 embedded in face-to-face relation thereto.

In this embodiment, as is apparent from the cross-sectional view of Fig. 2(a), when a horizontal force with respect to a building due to an earthquake or the like is applied to the viscous vibration-damping wall 1, all the vertical tensile force caused by the bending moment due to the shearing force of the viscous vibration-damping wall 1 is processed as the shear stress of the high-strength bolts in the direct connection of the gusset plates. Hence, the transmission of the stress is made reasonable and rational.

Fig. 2(b) is a cross-sectional view of a central portion in the method of installation of the viscous vibration-damping wall.

The viscous vibration-damping wall 1 is mounted on the rising metal plate 11, and the high-strength bolt hole portions of the joining member 7 provided in the central portion of the viscous vibration-damping wall and the high-strength bolt hole portions of the rising metal plate 11 are subjected to one-plane friction-type high-strength bolted connection 15. In addition, the intermediate plate 18 of the viscous vibration-damping wall 1 and the first gusset plate 17 provided on the upper-floor girder 4 are clamped at their central portions by the pair of splicing plates 19 and are subjected to two-plane friction-type high-strength bolted connection 20. At the end portions on both sides of the intermediate plate 18 and the first gusset plate 17, each flange plate 21 of the first gusset plate 17 and each flange plate provided on the intermediate plate 18 are clamped by the pair of splicing plates and are firmly connected by two-plane friction-type high-strength bolted connection.

As shown in the drawing, although the joining member 7 is frictionally connected in one plane on both sides of the cross-sectional center of the viscous vibration-damping wall, since the aforementioned bending moment does not occur in the central portion of the viscous vibration-damping wall, the lifting force does not occur in the flanges on both sides of the joining member 7. Hence, the tensile stress does not occur in the high-strength bolts in the one-plane friction-type high-strength bolted connection 15.

Therefore, as for the base plate, the joining member, the rising metal plate, and the like, it becomes possible to provide measures by using structural members which are substantially reduced as compared with the conventional structure, and it becomes possible to adopt a structure which utterly does not require the reinforcing ribs and the like.

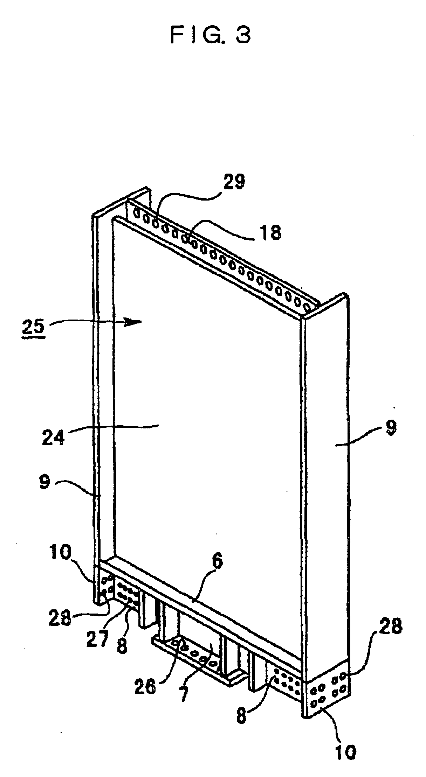

Fig. 3 is a perspective view of the viscous vibration-damping wall.

In the viscous vibration-damping wall 1, as shown in the drawing, a housing 25 with its upper end open is formed by uprightly setting a pair of steel-made side plates 24 on the base plate 6 and by disposing the pair of flange plates 9 on both sides of the pair of side plates 24, and the intermediate plate 18 is inserted in the housing 25. A viscous material or a viscoelastic material is placed in the gap between the housing 25 and each side of the intermediate plate 18, and the arrangement provided is such that a horizontal force applied from the outside is dampened between the base plate 6 and the intermediate plate 18.

It should be noted that although, in this embodiment, a description is given of the intermediate plate 18 as being a single plate, since, as is known, it is the means of the conventional practice to attempt the reinforcement of the seismic control force by arranging a plurality of intermediate plates in parallel in the viscous vibration-damping wall, it is naturally possible to adopt a plurality of intermediate plates in the method of installing the viscous vibration-damping wall in accordance with the invention.

The joining member 7 is attached to the central portion of the base plate 6 at the lower end of the viscous vibration-damping wall 1 as shown in the drawings, and the pair of second gusset plates 8 are suspended in the same direction as that of the intermediate plate from the base plate 6 at positions close to side end portions of the viscous vibration-damping wall 1 on both sides of the joining member 7. The length of the second gusset plates 8 is set to be a dimension shorter than that of the joining member 7 for the aforementioned reason. Also, the pair of third gusset plates 10 having the same length as the second gusset plates 8 are orthogonally suspended from the pair of flange plates 9.

The above-described base plate method enhances the safety of construction work and facilitates site work since the viscous vibration-damping walls can be self-supported stably during their transportation, storage, and on-site setting.

Although the base plate 6 in its outward appearance appears to be the same as the conventional viscous vibration-damping wall, since it is unnecessary to withstand the vertical force, there is no need to provide the reinforcing rib plates, and the base plate 6 can be provided with small thickness and simple shape, as described above.

As shown in the drawings, the joining member 7 and the second and third gusset plates 8 and 10 are provided with high-strength bolt hole portions 26, 27, and 28 for being connected to the high-strength bolt hole portions provided in the flat plate 12 of the rising metal plate and the respectively opposing gusset plates embedded in the lower-floor girder. High-strength bolt hole portions 29 for being directly connected to the aforementioned first gusset plate 17 are provided at a tip portion of the intermediate plate 18.

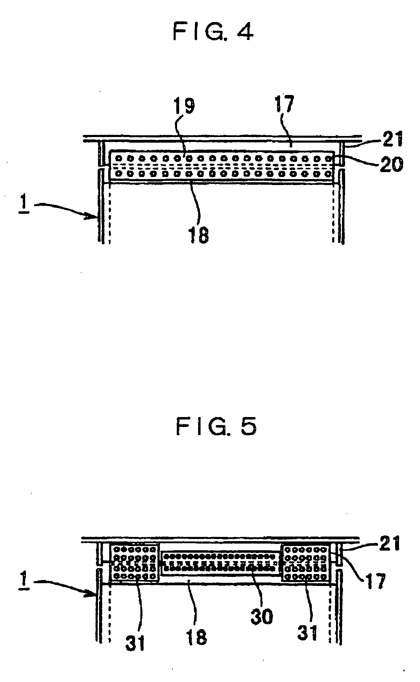

Fig. 4 shows an embodiment of connecting the intermediate plate and the gusset plate.

In this embodiment, the first gusset plate 17 and the intermediate plate 18 are directly connected.

Namely, the first gusset plate 17 and the intermediate plate 18 are clamped by the two splicing plates 19, and are connected by being subjected to the two-plane friction-type high-strength bolted connection 20. At the end portions on both sides of the first gusset plate 17 and the intermediate plate 18, since each of the flange plates 21 of the first gusset plate 17 and each of the flange plates provided on the intermediate plate 18 are clamped by the splicing plates and are firmly connected by the two-plane friction-type high-strength bolted connection, the viscous vibration-damping wall 1 and the upper-floor girder 4 are thereby integrally connected.

In the direct connection of the first gusset plate 17 and the intermediate plate 18, the splicing plates are not necessarily required, and if the welding position of the gusset plate is offset in advance from the center of the web of the upper-floor girder such that the center of the web of the upper-floor girder and the center of the intermediate plate are aligned with each other, the direct connection of the first gusset plate 17 and the intermediate plate 18 can be also effected by directly connecting them by one-plane friction-type connection using the high-strength bolts.

The adoption of this one-plane friction-type connection contributes to the reduction of the cost since the splicing plates are disused.

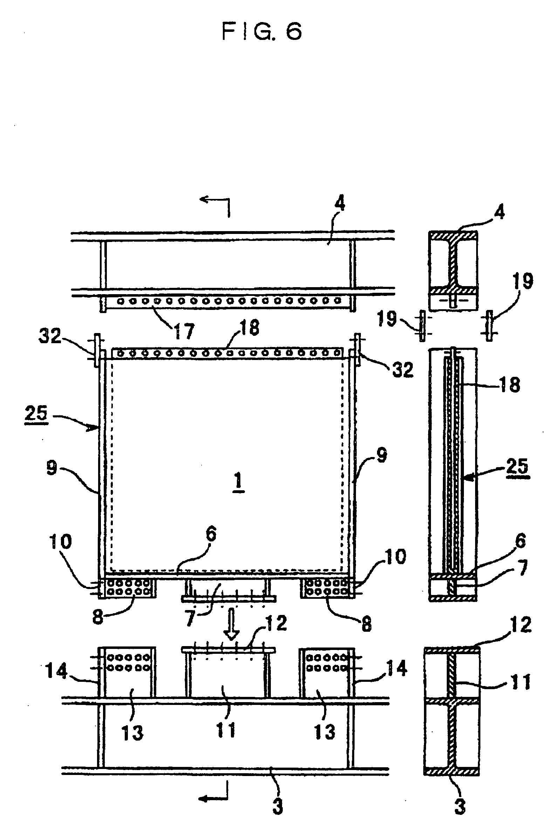

Fig. 5 shows another embodiment of connecting the intermediate plate and the gusset plate.

In this embodiment, although there is no specific change in the intermediate plate, a difference lies in that each splicing plate is divided into a central portion 30 and a pair of side portions 31. The bolt hole portions are arranged in a single row on each of upper and lower sides of the central portion 30 of the splicing plate, while two rows of bolt hole portions each on upper and lower sides are arranged on the side splicing plates 31 so as to cope with the allotted shear stresses.

The division of the splicing plate is not only rational in the allotment of the stress, but has an advantage of being able to flexibly cope with the unevenness between the gusset plate and the intermediate plate caused by the erection accuracy at the site. Further, since the weight per location can be reduced, this arrangement exhibits the advantage of allowing the operation to be performed sufficiently by the human strength of operators without using special heavy machinery or equipment.

Fig. 6 is an exploded view for explaining a method of installing a viscous vibration-damping wall in accordance with the invention.

The installing operation begins with the fixation to unillustrated pillars of the lower-floor girder 3 with the rising metal plate 11 and the fourth and fifth gusset plates 13 and 14 integrated thereto by welding.

Meanwhile, the intermediate plate 18 and the housing 25 of the viscous vibration-damping wall 1 are attached to the upper-floor girder 4 by being integrally fixed by means of a pair of temporary suspending pieces 32. At the same time, the first gusset plate 17 and the intermediate plate 18 are subjected to two-plane friction-type high-strength bolted connection 20 using the pair of splicing plates 19 so as to be directly connected to each other. At the end portions on both sides of the first gusset plate 17 and the intermediate plate 18, each of the pair of flange plates 21 of the first gusset plate 17 and each of the flange plates provided on the intermediate plate 18 are clamped by the splicing plates, and are firmly connected by the two-plane friction-type high-strength bolted connection.

In a case where there is spacewise leeway in the vicinities of the flange plates at the end portions of the first gusset plate 17, instead of merely fixing the intermediate plate 18 and the housing 25 of the viscous vibration-damping wall 1 integrally, the temporary suspending pieces 32 may also directly connect the housing 25 and the flange plates to ensure that a force other than the self-weight will not be applied to the intermediate plate 18 of the viscous vibration-damping wall 1.

It should be noted that the direct connection based on the one-plane friction-type high-strength connection without using the splicing plates is the same as described before.

The upper-floor girder 4 integrated with the viscous vibration-damping wall 1 is suspended and set at a predetermined position, and even if the temporary suspending pieces 32 are used by whichever method, it is possible to prevent the viscous material from undergoing shear deformation by the self-weight of the viscous vibration-damping wall and fix the viscous vibration-damping wall immovably so as to suppress its rotation about the axis of the girder during hanging.

Upon completion of positioning, one-plane friction-type high-strength bolted connection 15 is effected between the bolt hole portions 26 of the joining member 7 and the high-strength bolt hole portions of the rising metal plate 11, thereby completing the installation of the viscous vibration-damping wall 1 on the main frame structure.

At this stage, if the aforementioned temporary suspending pieces 32 are removed, the housing 25 of the viscous vibration-damping wall 1 is connected to the lower-floor girder 3, and the intermediate plate 18 of the viscous vibration-damping wall 1 is connected to the upper-floor girder 4, which makes it possible for the viscous vibration-damping wall 1 to assume a movable state whereby it is capable of demonstrating its intrinsic vibration-damping function, and the installation work is thereby completed.

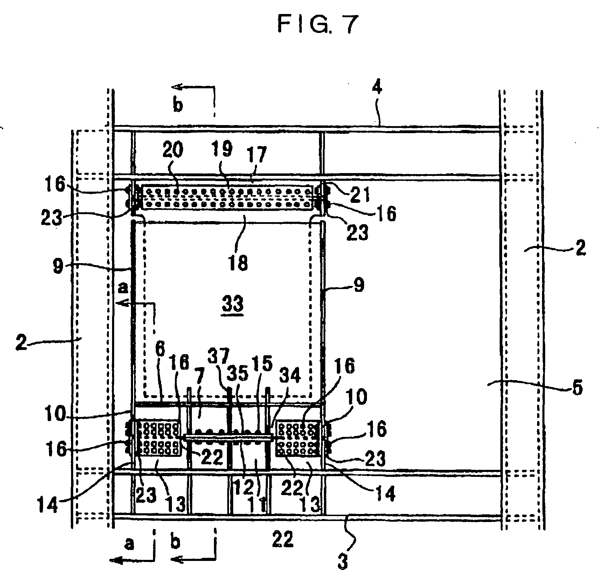

Fig. 7 is a perspective view of another embodiment of the viscous vibration-damping wall.

In a viscous vibration-damping wall 33, although its basic structure is similar to that of the above-described viscous vibration-damping wall 1, improvements are made on the structure for connection to the lower-floor girder.

Namely, the joining member 7, which is disposed at the central portion of the lower end of the base plate 6, and the pair of second gusset plates 8, which are spaced apart from each other and separately disposed at positions close to the side end portions of the viscous vibration-damping wall 1 on both sides of the joining member 7, are formed integrally as a single steel plate 34 in the viscous vibration-damping wall 1. The steel plate 34 is provided with a function similar to that of the joining member 7 of the viscous vibration-damping wall 1 as a joining/receiving plate 35 is attached horizontally to its central portion by welding, and the joining/receiving plate 35 is provided with the high-strength bolt hole portions 26. Both sides of the central portion of the steel plate 34 correspond to the gusset plates 8 suspended from the base plate of the viscous vibration-damping wall 1, and are provided with the high-strength bolt hole portions 27 for connection to the gusset plates embedded in the lower-floor girder.

Accordingly, since the joining/receiving plate 35 is positioned lower than the other portions of the steel plate 34, the stability at the time of handling the viscous vibration-damping wall 33 is ensured.

It should be noted that, as shown in the drawing, the steel plate 34 and the joining/receiving plate 35 are supported by reinforcing ribs to ensure the strength, and the other arrangements including the third gusset plates 10 suspended from the flange plates 9 and joined integrally to the steel plate 34 by welding are similar to those of the above-described embodiment.

In this embodiment, the joining/receiving plate 35 is welded to the steel plate 34, and is subjected to one-plane friction type connection on both sides of the cross-sectional center of the viscous vibration-damping wall. However, since the lifting force does not occur in the joining/receiving plate 35, the tensile stress does not occur at the weld surfaces and the high-strength bolts at the one-plane friction-type high-strength bolted connection 15, so that it is possible to adopt a structure having leeway strengthwise.

Accordingly, as for the base plate, the steel plate, the joining/receiving plate, the rising metal plate, and the like, it becomes possible to provide measures by using structural members which are substantially reduced as compared with the conventional structure, and the lower structure for connecting to the lower-floor girder is substantially simplified. Therefore, structural processing and the number of steps of assembly are reduced, so that a large contribution can be made in terms of the reduction of the cost.

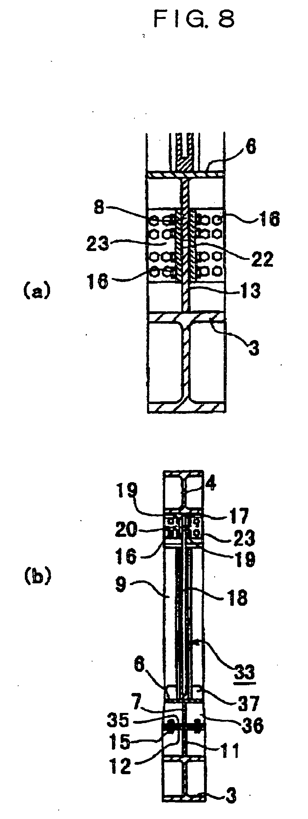

Fig. 8 is a cross-sectional view of various parts in the state in which the other viscous vibration-damping wall is installed on the main frame structure.

Fig. 8(a) is a partial cross-sectional view taken in the direction of arrows a - a in Fig. 7, and illustrates a state of connection between, on the one hand, the high-strength bolt hole portions 27 disposed at both end portions of the steel plate 33 suspended from the base plate 6 of the viscous vibration-damping wall 33 and the gusset plates suspended from the flange plates and, on the other hand, the lower-floor girder.

The high-strength bolt hole portions 27 of the steel plate 34 suspended from the base plate and the fourth gusset plates 13 embedded in the lower-floor girder are directly connected by the two-plane friction-type high-strength bolted connection 16 using the splicing plates 22, as shown in the drawings.

Similarly, each splicing plate 23 shown in elevation is used for the two-plane friction-type high-strength bolted connection 16 adopted for the direct connection between the gusset plate 10 suspended from the flange plate 9 arranged on each side of the viscous vibration-damping wall 33 and the fifth gusset plate 14 embedded in face-to-face relation thereto.

Fig. 8(b) is a cross-sectional view of the central portion in the method of installing the viscous vibration-damping wall. The viscous vibration-damping wall 33 is mounted on the rising metal plate 11, and the high-strength bolt hole portions 26 of the joining/receiving plate 35 provided in the central portion of the steel plate 34 and the high-strength bolt hole portions of the rising metal plate 11 are subjected to the one-plane friction-type high-strength bolted connection 15. In addition, the intermediate plate 18 of the viscous vibration-damping wall 33 and the first gusset plate 17 provided on the upper-floor girder 4 are clamped at their central portions by the pair of splicing plates 19 and are subjected to the two-plane friction-type high-strength bolted connection 20. At the end portions on both sides of the intermediate plate 18 and the gusset plate 17, each flange plate 21 of the first gusset plate 17 and each flange plate provided on the intermediate plate 18 are clamped by the pair of splicing plates 23 and are firmly connected by the two-plane friction-type high-strength bolted connection 16.

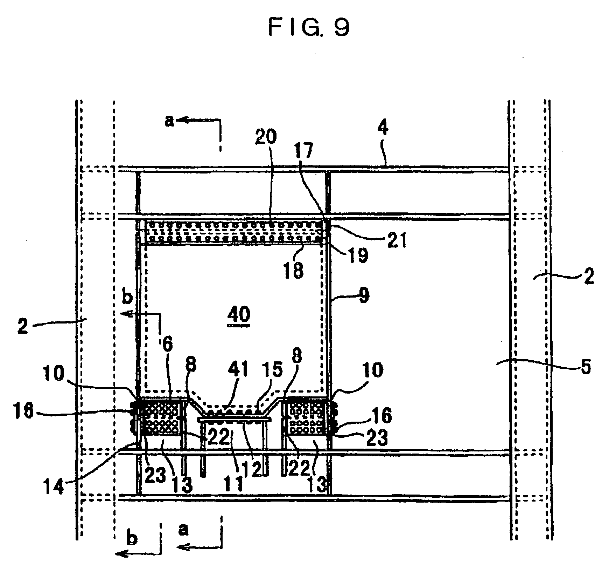

Fig. 9 is an elevational view illustrating another embodiment of the structure for installing a viscous vibration-damping wall in accordance with the invention.

A viscous vibration-damping wall 40 in this embodiment is similar to the structure for installing a viscous vibration-damping wall described with reference to Fig. 1 in that this viscous vibration-damping wall 40 is also disposed in the plane of structure 5 formed by the pair of pillars 2, the lower-floor girder 3, and the upper-floor girder 4, and is joined to the lower-floor girder 3 and the upper-floor girder 4, respectively. However, a difference lies in the structure for installing the viscous vibration-damping wall 40 on the lower-floor girder 3.

At a lower end of the viscous vibration-damping wall 40, high-strength bolt hole portions for connection to the rising metal plate 11 are provided in a central portion 41 of the base plate 6 instead of providing the joining member 7. On both sides of the central portion 41, the base plate 6 is bent toward the upper-floor girder side in the illustration, i.e., in the upper direction of the viscous vibration-damping wall, so that the base plate 6 is provided with steps and is hence formed in the shape of a tray.

The pair of second gusset plates 8 are suspended in the same direction as that of the intermediate plate from portions close to the respective ends of the tray shape in a manner similar to the example shown in Fig. 1, but their length is set to be a dimension not longer than that of the central portion 41, and the arrangement provided is such that the self-weight of the viscous vibration-damping wall is received by the central portion 41 of the base plate 6. Further, the pair of third gusset plates 10 suspended from the pair of second gusset plates 8 are provided with the same length as that of the second gusset plates 8 and are set orthogonally thereto in the same way as the above-described example.

In addition, the shapes of the lower-floor girder and the upper-floor girder are also similar, and measures provided to connect the viscous vibration-damping wall 40 to the lower-floor girder 3 are also similar to those of the already-described example in that the central portion 41 of the base plate 6 is placed on the flange of the lower-floor girder 3 directly or on the rising metal plate 11, and is subjected to the one-plane friction-type high-strength connection 15, and that the respective gusset plates are subjected to the two-plane friction-type high-strength connection 16.

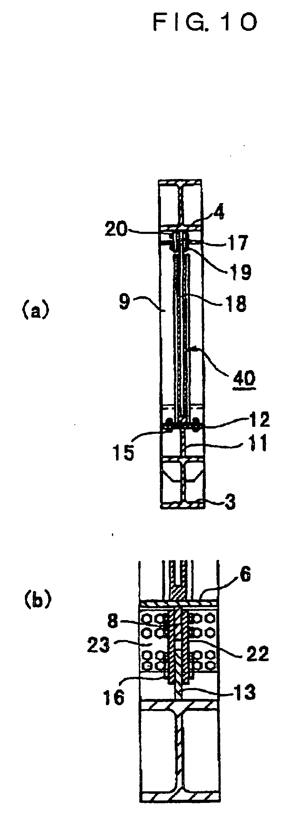

Fig. 10 is a partial cross-sectional view of the structure for installing a viscous vibration-damping wall shown in Fig. 9.

Fig. 10(a) illustrates a state in which the central portion 41 of the base plate 6 is placed on the rising metal plate 11 provided on the lower-floor girder 3, and is connected thereto by the one-plane friction-type high-strength bolted connection 15.

As described above, since the bending moment does not occur in the central portion 41, only the shear stress is applied to the high-strength bolts for the central portion 41 and the rising metal plate 11, so that stable measures are provided.

Fig. 10(b) shows a state of connection of the gusset plate provided at the end portion of the viscous vibration-damping wall 40.

Since this state is similar to the one shown in Fig. 2(b), a description thereof will be omitted, and each connecting portion is coped with by the two-plane friction-type high-strength bolted connection. Since the vertical stress is applied to the high-strength bolts as the shear stress, so that a stable coping state is formed.

The first advantage of this embodiment lies in that, in comparison with the case where the overall base plate is merely raised, since the intermediate plate of the viscous vibration-damping wall can be enlarged by the portion in which the step is provided in the base plate, the shear area with respect to the viscous material can be increased, thereby making it possible to improve the damping performance as the damper.

The second advantage lies in that rational measures against the stress are realized since the positions and shapes for processing so as to receive all the stress by the shear stress of the high-strength bolts are clarified as the horizontal force applied to the viscous vibration-damping wall due to the horizontal force from outside the building is coped with by the central portion, while the vertical force occurring in the end portions due to the bending moment occurring in the viscous vibration-damping wall is coped with by the gusset plates.

In the foregoing embodiments, it has been described that the gusset plate suspended from the base plate and the gusset plates suspended from the flange plates, on the one hand, and the gusset plates respectively opposing thereto and embedded in the lower-floor girder, on the other hand, are all connected.

However, depending on values of the vertical force occurring in the end portions due to the bending moment occurring in the viscous vibration-damping wall, the connection of the gusset plates suspended from the flange plates may be omitted, and the vertical force may be coped with by only the gusset plate suspended from the base plate. Alternatively, on the contrary, the gusset plates may be connected after appropriately selecting them in correspondence with the assumed vibration-damping force.

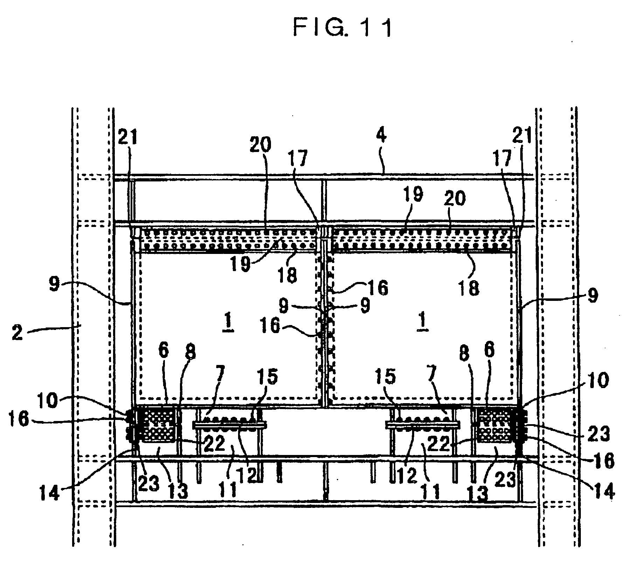

Fig. 11 is an elevational view of a state in which the viscous vibration-damping walls in accordance with the invention are installed in a juxtaposed manner. A pair of viscous vibration-damping walls 1 are installed in a juxtaposed manner in the plane of structure 5 which is formed by the pair of pillars 2, the lower-floor girder 3, and the upper-floor girder 4, and is joined integrally to the lower-floor girder 3 and the upper-floor girder 4.

The two viscous vibration-damping walls 1 are placed on the rising metal plate 11 welded to the flange surface of the lower-floor girder 3 and formed integrally with the lower-floor girder 3. The fourth and fifth gusset plates 13 and 14 are embedded at positions opposing the second and third gusset plates 8 and 10 suspended from both outer ends of the integrated assembly of the viscous vibration-damping walls 1.

The viscous vibration-damping walls 1 at their mutually opposing flange plates 9 on their one sides are subjected to the one-plane friction-type high-strength bolted connection 15, and this assembly in the integrated state is placed on the rising metal plate 11.

The viscous vibration-damping walls 1 are integrally connected to the lower-floor girder 3 as the respective joining members 7 and the rising metal plate 11 are subjected to the one-plane friction-type high-strength bolted connection 15, and the second and third gusset plates 8 and 10 on the outer ends and the fourth and fifth gusset plates 13 and 14 provided on the lower-floor girder 3 are subjected to the two-plane friction-type high-strength bolted connection 16.

The integrally connected viscous vibration-damping walls 1 process the lifting force of the base plates and the vertical force occurring in edge portions of the viscous vibration-damping walls as the bending moment due to the shearing force which is borne during an earthquake is received as the shearing force of the high-strength bolts by the gusset plates.

Two first gusset plates 17 are attached to the lower flange surface of the upper-floor girder 4 in alignment with the web of the girder in the same way as the above-described embodiment.

The intermediate plate 18 of each viscous vibration damping wall 1 and the first gusset plate 17 are clamped by the two splicing plates 19, and are subjected to two-plane friction-type high-strength bolted connection 20, thereby allowing the viscous vibration-damping walls 1 and the upper-floor girder 4 to be integrally connected.

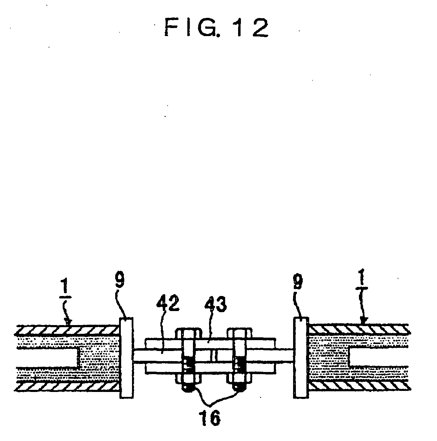

Fig. 12 shows still another embodiment in which a plurality of viscous vibration-damping walls are joined to each other. On each opposing flange plate 9 of the viscous vibration-damping wall 1, an additional gusset plate 42 is disposed in parallel with the upper- and lower-floor girders, and is provided with high-strength bolt hole portions.

When the two viscous vibration-damping walls 1 are integrated, as shown in the drawing, the two additional gusset plates 42 are brought close to each other and are clamped by two splicing plates 43, and are connected by the two-plane friction-type high-strength bolted connection 20.

In the case of this embodiment, since the operator is able to perform the connecting operation with a posture oriented perpendicular to the viscous vibration-damping wall, there is a degree of freedom in the operator's movement as compared with the case where the flange plates 9 are directly joined, so that there is an advantage in that the installation work can be performed simply with a comfortable posture.

As described above, the structure for installing a viscous vibration-damping wall in accordance with the invention is not limited to the installation of a single viscous vibration-damping wall, and is also applicable to the case where a plurality of viscous vibration-damping walls are installed in a juxtaposed manner.

Regardless of the number of the viscous vibration-damping walls to be juxtaposed, by subjecting the flange plates on their mutually opposing sides to one-plane friction-type high-strength bolted connection or two-plane friction-type high-strength bolted connection using the gusset plates disposed at the flange plates, the entire unit can be handled as one viscous vibration-damping wall. In the fixation of the viscous vibration-damping walls to the upper-floor girder, the integration with the upper-floor girder can be ensured by merely attaching the temporary suspending pieces to the outer flange plates.

## Claims

1. A structure for installing a viscous vibration-damping wall (1) and including said viscous vibration-damping wall (1), in which the viscous vibration-damping wall (1) comprises a housing (25) with an upper end open, an intermediate plate (18) which is inserted in said housing (25), and a viscous material or a viscoelastic material which is placed in a gap portion between the housing (25) and the intermediate plate (18), said housing including a base plate (6), a pair of steel-made side plates (24) uprightly set on said base plate (6) and a pair of flange plates (9) disposed on both sides of said pair of side plates (24), said structure further including a lower-floor girder (3), an upper-floor girder (4), and a first gusset plate (17), said base plate (6) in a central portion thereof being provided with hole portions (26) for accommodating high-strength bolts for connection of the base plate to a flange of said lower-floor girder (3), said flange of said lower-floor girder (3) being provided with hole portions opposing said hole portions (26) of said central portion of said base plate (6), for accommodating said high-strength bolts, said viscous vibration-damping wall (1) being connected to said lower-floor girder (3) by the high-strength bolts accommodated in opposing ones of said hole portions (26) of the base plate (6) and said hole portions of the flange of the lower-floor girder (3), and said viscous vibration-damping wall (1) being connected to said upper-floor girder (4) by connecting said intermediate plate (18) and said first gusset plate (17), said first gusset plate (17) being fixed to a flange of said upper-floor girder (4) by one-plane friction-type high-strength bolted connection or two-plane friction-type high-strength bolted connection, **characterized in that** the structure further includes a pair of the second gusset plates (8), a pair of third gusset plates (10), fourth gusset plates (13), and fifth gusset plates (14), said base plate (6) of said viscous vibration-damping wall (1) having on both sides of a group of said hole portions (26) of the base plate (6) said pair of second gusset plates (8), said pair of second gusset plates (8) being suspended in the same direction as that of said intermediate plate (18) from said base plate (6) down to a position at a short distance therefrom, that said pair of flange plates (9) respectively have one of said pair of third gusset plates (10), said pair of third gusset plates (10) being disposed orthogonally with respect to said intermediate plate (18) and suspended in the same direction as that of said intermediate plate (18) from said flange plate (9) down to the position at the short distance from said base plate (6), that said fourth gusset plates (13) oppose said second gusset plates (8) suspended from said base plate (6) and said fifth gusset plates (14) oppose said third gusset plates (10) suspended from said flange plates (9), said fourth gusset plates (13) and said fifth gusset plates (14) being embedded in said lower-floor girder (3) on both sides of said hole portions of said flange of said lower-floor girder (3), and that said viscous vibration-damping wall (1) is connected to said lower-floor girder (3) by connecting said second gusset plates (8) suspended from said base plate (6) and said fourth gusset plates (13) opposing said second gusset plates (8) suspended from said base plate (6) and embedded in said lower-floor girder (3) and by connecting said third gusset plates (10) suspended from said flange plates (9) and said fifth gusset plates (14) opposing said gusset plates (10) suspended from said flange plates (9) and embedded in said lower-floor girder (3).

2. The structure for installing a viscous vibration-damping wall (1) according to claim 1, wherein said base plate (6) of said viscous vibration-damping wall (1) has in its central portion a joining member (7) for connection to said flange of said lower-floor girder (3), and said joining member (7) is provided with said hole portions (26) for accommodating the high-strength bolts.

3. The structure for installing a viscous vibration-damping wall (1) according to claim 2, wherein said joining member (7) disposed in said central portion and provided with said hole portions (6) for accommodating high-strength bolts and said pair of second gusset plates (8) suspended from said base plate (6) are formed integrally.

4. The structure for installing a viscous vibration-damping wall (1) according to claim 1, wherein said base plate (6) of said viscous vibration-damping wall (1) is arranged such that said base plate (6) on both sides of said central portion, where said pair of second gusset plates (8) suspended therefrom are provided, is raised toward said upper-floor girder (4) relative to said central portion provided with said hole portions (26) for accommodating said high-strength bolts, so as to be respectively provided with steps.

5. The structure for installing a viscous vibration-damping wall (1) according to any one of claims 1 to 4, wherein the connection of said gusset plates is effected only between each of said second gusset plates (8) suspended from said base plate (6) and each of said fourth gusset plates (13) embedded in said lower-floor girder (3) and opposed to said second gusset plates (8) suspended from said base plate (6).

6. The structure for installing a viscous vibration-damping wall (1) according to any one of claims 1 to 5, wherein a rising metal plate (11) is installed on said flange of said lower-floor girder (3), and is provided with base-plate connecting hole portions.

7. The structure for installing a viscous vibration-damping wall (1) according to any one of claims 1, to 6, wherein each of said second gusset plates (8) suspended from said base plate (6) is connected to each of said fourth gusset plates (13) embedded in said lower-floor girder (3) and opposed to said second gusset plates (8) suspended from said base plate (6) by means of one-plane friction-type high-strength bolted connection.

8. The structure for installing a viscous vibration-damping wall (1) according to any one of claims 1 to 7, wherein each of said third gusset plates (10) suspended from said flange plates (9) is connected to each of said fifth gusset plates (14) embedded in said lower-floor girder (3) and opposed to said gusset plates (10) suspended from said flange plates (9) by means of one-plane friction-type high-strength bolted connection.

9. The structure for installing a viscous vibration-damping wall (1) according to any one of claims 1 to 8, wherein each of said second gusset plates (8) suspended from said base plate (6) is connected to each of said fourth gusset plates (13) embedded in said lower-floor girder (3) and opposed to said gusset plates (8) suspended from said base plate (6) by means of two-plane friction-type high-strength bolted connection using a pair of splicing plates.

10. The structure for installing a viscous vibration-damping wall (1) according to any one of claims 1 to 9, wherein each of said third gusset plates (10) suspended from said flange plates (9) is connected to each of said fifth gusset plates (14) embedded in said lower-floor girder (3) and opposed to said third gusset plates (10) suspended from said flange plates (9) by means of two-plane friction-type high-strength bolted connection using a pair of splicing plates.

11. The structure for installing a viscous vibration-damping wall (1) according to any one of claims 1 to 10, wherein said intermediate plate (18) is connected to said first gusset plate (17) fixed to and suspended from said upper-floor girder (4) by means of two-plane friction-type high-strength bolted connection using a pair of splicing plates (19).

12. The structure for installing a viscous vibration-damping wall (1) according to claim 11, wherein each of said splicing plates (19) is divided into a central portion and a pair of side portions.

13. A method of installation applied to the structure for installing a viscous vibration-damping wall (1) according to any one of claims 1 to 12, comprising the steps of:
fixing said lower-floor girder (3) to a pair of pillars (2, 2) disposed on both sides thereof, said lower-floor girder (3) being constructed such that said flange is provided with said hole portions for accommodating high-strength bolts for connection to said base plate (6), and said pair of fourth gusset plates (13) opposing said pair of second gusset plates (8) suspended from said base plate (6) on both sides of said group of said hole portions (26) for accommodating high-strength bolts as well as said pair of first gusset plates (14) opposing said pair of third gusset plates (10) respectively suspended from said pair of flange plates (9) are embedded in said lower-floor girder (3);
setting at a predetermined position said upper-floor girder (4) with which said viscous vibration-damping wall (1) is integrated by connecting said intermediate plate (18) of said viscous vibration-damping wall (1) to said first gusset plate (17) disposed on a bracket and by connecting said housing (25) to said upper-floor girder (4) by means of a pair of temporary suspending pieces (32);
connecting opposing ones of said hole portions (26) for a commodating high-strength bolts and opposing ones of said second and fourth gusset plates (8, 13) and said third and fifth gusset plates (10, 14) of said viscous vibration-damping wall(1) and said lower-floor girder (3); and
removing said temporary suspending pieces (32).

## Patentansprüche

1. Konstruktion zur Montage einer viskosen Vibrationsdämpfungswand (1) und enthaltend die viskose Vibrationsdämpfungswand (1), wobei die viskose Vibrationsdämpfungswand (1) ein Gehäuse (25) mit einem offenen oberen Ende, eine Zwischenplatte (18), die in das Gehäuse (25) eingesetzt ist, und ein viskoses Material bzw. ein viskoelastisches Material umfaßt, das in einem Spaltabschnitt zwischen dem Gehäuse (25) und der Zwischenplatte (18) angeordnet ist, wobei das Gehäuse eine Basisplatte (6), ein Paar von aus Stahl bestehenden Seitenplatten (24), die auf der Basisplatte (6) aufrecht angeordnet sind, und ein Paar von Flanschplatten (9) enthält, die zu beiden Seiten des Paares von Seitenplatten (24) angeordnet sind, wobei die Konstruktion außerdem einen Untergeschoßträger (3), einen Obergeschoßträger (4) und eine erste Eckversteifungsplatte (17) enthält, wobei die Basisplatte (6) in ihrem zentralen Abschnitt mit Lochabschnitten (26) zur Aufnahme von hochfesten Bolzen zur Verbindung der Basisplatte mit einem Flansch des Untergeschoßträgers (3) versehen ist, wobei der Flansch des Untergeschoßträgers (3) mit Lochabschnitten in Gegenüberlage zu den Lochabschnitten (26) des zentralen Abschnitts der Basisplatte (6) versehen ist, um die hochfesten Bolzen aufzunehmen, wobei die viskose Vibrationsdämpfungswand (1) mit dem Untergeschoßträger (3) durch die hochfeste Bolzen verbunden ist, die in Gegenüberliegenden der Lochabschnitte der Basisplatte (6) und den Lochabschnitten des Flansches der Untergeschoßträger (3) aufgenommen sind, und wobei die viskose Vibrationsdämpfungswand (1) mit dem Obergeschoßträger (4) durch verbinden der Zwischenplatte (18) mit der ersten Eckversteifungsplatte (17) verbunden ist, wobei die erste Eckversteifungsplatte (17) mit einem Flansch des Obergeschoßträgers (4) durch eine in einer Ebene liegende hochfeste Bolzenverbindung vom Reibungstyp oder durch eine in zwei Ebenen liegende hochfesten Bolzenverbindung vom Reibungstyp fest verbunden ist,
**dadurch gekennzeichnet, daß** die Konstruktion außerdem ein Paar von zweiten Eckversteifungsplatten (8) ein Paar von dritten Eckversteifungsplatten (10), vierten Eckversteifungsplatten (13) und fünften Eckversteifungsplatten (14) enthält, wobei die Basisplatte (6) der viskosen Vibrationsdämpfungswand (1) auf beiden Seiten eine Gruppe der Lochabschnitte (26) der Basisplatte (6) aufweist, wobei das Paar von zweiten Eckversteifungsplatten (8) in derselben Richtung wie die Zwischenplatte (18) von der Basisplatte (6) in eine Position unter kurzem Abstand von dieser abgehängt ist, daB das Paar von Flanschplatten (9) jeweils eine des Paares von dritten Eckversteifungsplatten (10) aufweist, wobei das Paar von dritten Eckversteifungsplatten (10) senkrecht in Bezug auf die Zwischenplatte (18) angeordnet und in derselben Richtung wie diese von der Zwischenplatte (18) von der Flanschplatte (9) in eine Position unter kurzem Abstand von der Basisplatte (6) abgehängt ist, daß die vierten Eckversteifungsplatten (13) den zweiten Eckversteifungsplatten (8) gegenüberliegen, die von der Basisplatte (6), abgehängt sind, und wobei die fünften Eckversteifungsplatten (14) den dritten Eckversteifungsplatten (10) gegenüberliegen, die von den Flanschplatten (9) abgehängt sind, wobei die vierten Eckversteifungsplatten (13) und die fünften Eckversteifungsplatten (15) in dem Untergeschoßträger (3) zu beiden Seiten der Lochabschnitte des Flansches des Untergeschoßträgers (3) eingebettet sind und daß die viskose Vibrationsdämpfungswand (1) mit dem Untergeschoßträger (3) durch Verbinden der zweiten Eckversteifungsplatten (8), die von der Basisplatte (6) abgehängt sind, mit den vierten Eckversteifungsplatten (13) in Gegenüberlage zu den zweiten Eckversteifungsplatten (8) verbunden sind, die von der Basisplatte (6) abgehängt und in dem Untergeschoßträger (3) eingebettet sind, und durch Verbinden der dritten Eckversteifungsplatten (10), die von den Flanschplatten (9) abgehängt sind, mit den fünften Eckversteifungsplatten (14) den Eckversteifungsplatten (10) gegenüberliegen, die von den Flanschplatten (9) abgehängt und in den Untergeschoßträger (3) eingebettet sind.

2. Konstruktion zur Montage einer viskosen Vibrationsdämpfungswand (1) nach Anspruch 1, wobei die Basisplatte (6) der viskosen Vibrationsdämpfungsplatte (1) in ihrem zentralen Abschnitt ein Verbindungselement (7) zur Verbindung mit dem Flansch des Untergeschoßträgers (3) aufweist, und wobei das Verbindungselement (7) mit den Lochabschnitten (26) zur Aufnahme der hochfesten Bolzen versehen ist.

3. Konstruktion zur Montage einer viskosen Vibrationsdämpfungswand (1) nach Anspruch 2, wobei das Verbindungselement (7), das in dem zentralen Abschnitt angeordnet und mit den Lochabschnitten (26) zur Aufnahme der hochfesten Bolzen versehen ist, und das Paar von zweiten Eckversteifungsplatten (8), die von der Basisplatte (6) abgehängt sind, integral gebildet sind.

4. Konstruktion zur Montage einer viskosen Vibrationsdämpfungswand (1) nach Anspruch 1, wobei die Basisplatte (6) der viskosen Vibrationsdämpfungswand (1) derart angeordnet ist, daß die Basisplatte (6) zu beiden Seiten des zentralen Abschnitts, wo das Paar von zweiten Eckversteifungsplatten (8) von dort abgehängt vorgesehen sind, in Richtung auf den Obergeschoßträger (4) relativ zu dem zentralen Abschnitt hochsteht, der mit den Lochabschnitten (26) zum Aufnehmen der hochfesten Bolzen versehen ist, um jeweils mit Stufen versehen zu sein.

5. Konstruktion zur Montage einer viskosen Vibrationsdämpfungswand (1) nach einem der Ansprüche 1 bis 4, wobei die Verbindung der Eckversteifungsplatten ausschließlich zwischen jeder der zweiten Eckversteifungsplatten (8), die von der Basisplatte (6) abgehängt sind, und jede der vierten Eckversteifungsplatten (13) bewirkt ist, die in dem Untergeschoßträger (3) eingebettet sind und sich in Gegenüberlage zu den zweiten Eckversteifungsplatten (8) befinden, die von der Basisplatte (6) abgehängt sind.

6. Konstruktion zur Montage einer viskosen Vibrationsdämpfungswand (1) nach einem der Ansprüche 1 bis 5, wobei eine hochstehende Metallplatte (11) auf dem Flansch des Untergeschoßträgers (3) montiert und mit Basisplattenverbindungslochabschnitten versehen ist.

7. Konstruktion zur Montage einer viskosen Vibrationsdämpfungswand (1) nach einem der Ansprüche 1 bis 6, wobei jede der zweiten Eckversteifungsplatten (8), die von der Basisplatte (6) abgehängt sind, mit jeder der vierten Eckversteifungsplatten (13) verbunden ist, die in den Untergeschoßträger (3) eingebettet sind und sich in Gegenüberlage zu den zweiten Eckversteifungsplatten (8) befinden, die von der Basisplatte (6) abgehängt sind, mittels einer in einer Ebene liegenden hochfesten Bolzenverbindung vom Reibungstyp.

8. Konstruktion zur Montage einer viskosen Vibrationsdämpfungswand (1) nach einem der Ansprüche 1 bis 7, wobei jede der dritten Eckversteifungsplatten (10), die von den Flanschplatten (9) abgehängt sind, mit jeder der fünften Eckversteifungsplatten (14) verbunden sind, die in dem Untergeschoßträger (3) eingebettet sind und sich in Gegenüberlage zu den Eckversteifungsplatten (10) befinden, die von den Flanschplatten (9) abgehängt sind, mittels einer in einer Ebene liegenden hochfesten Bolzenverbindung vom Reibungstyp.

9. Konstruktion zur Montage einer viskosen Vibrationsdämpfungswand (1) nach einem der Ansprüche 1 bis 8, wobei jede der zweiten Eckversteifungsplatten (8), die von der Basisplatte (6) abgehängt sind, mit jeder der vierten Eckversteigungsplatten (13) verbunden ist, die in dem Untergeschoßträger (3) eingebettet sind und sich in Gegenüberlage zu den Eckversteifungsplatten (8) befinden, die von der Basisplatte (6) abgehängt sind, mittels einer in zwei Ebenen liegenden hochfesten Bolzenverbindung vom Reibungstyp unter Verwendung eines Paares von Keilplatten.

10. Konstruktion zur Montage einer viskosen Vibrationsdämpfungswand (1) nach einem der Ansprüche 1 bis 9, wobei jede der dritten Eckversteifungsplatten (10), die von den Flanschplatten (9) abgehängt sind, mit jeder der fünften Eckversteifungsplatten (14) verbunden ist, die in dem Untergeschoßträger (3) eingebettet sind und sich in Gegenüberlage zu den dritten Eckversteifungsplatten (10) befinden, die von den Flanschplatten (9) abgehängt sind, mittels einer in zwei Ebenen liegenden hochfesten Bolzenverbindung vom Reibungstyp unter Verwendung eines Paares von Keilplatten.

11. Konstruktion zur Montage einer viskosen Vibrationsdämpfungswand (1) nach einem der Ansprüche 1 bis 10, wobei die Zwischenplatte (18) mit der ersten Eckversteifungsplatte (17) verbunden ist, die an der Obergeschoßplatte (4) fest angebracht und von dieser abgehängt ist mittels einer in zwei Ebenen liegenden hochfesten Bolzenverbindung vom Reibungstyp unter Verwendung eines Paares von Keilplatten (19).

12. Konstruktion zur Montage einer viskosen Vibrationsdämpfungswand (1) nach Anspruch 11, wobei jede der Keilplatten (19) in einen zentralen Abschnitt und ein Paar von Seitenabschnitten unterteilt ist.

13. Montageverfahren für eine Konstruktion zum Montieren einer viskosen Vibrationsdämpfungswand (1) nach einem der Ansprüche 1 bis 12, aufweisend die Schritte:
Festlegen des Untergeschoßträgers (3) an einem Paar von Säulen (2,2), die beiderseits des Trägers angeordnet sind, wobei der Untergeschoßträger (3) derart erstellt ist, daß der Flansch mit den Lochabschnitten zur Aufnahme hochfester Bolzen zur Verbindung mit der Basisplatte (6) versehen ist, und wobei das Paar von vierten Eckversteifungsplatten (13) in Gegenüberlage zu dem Paar von zweiten Eckversteifungsplatten (8), die von der Basisplatte (6) zu beiden Seiten der Gruppe von Lochabschnitten (26) zur Aufnahme hochfester Bolzen sowie in Gegenüberlage zu dem Paar von fünften Eckversteifungsplatten (14) in Gegenüberlage zu den dritten Eckversteifungsplatten (10), die jeweils von dem Paar von Flanschplatten (9) abgehängt sind, in dem Untergeschoßträger (3) eingebettet sind;
Anordnen des Obergeschoßträgers (4), mit welchem die viskose Vibrationsdämpfungswand (1) integriert ist, in einer vorbestimmten Position, durch Verbinden der Zwischenplatte (18) der viskosen Vibrationsdämpfungswand (1) mit der ersten Eckversteifungsplatte (17), die auf einer Stütze angeordnet ist, und durch Verbinden des Gehäuses (25) mit dem Obergeschoßträger (4) mittels eines Paares von temporären Aufhängungselementen (32);
Verbinden Gegenüberliegender der Lochabschnitte (26) zur Aufnahme hochfester Bolzen, und Gegenüberliegender der zweiten und vierten Eckversteifungsplatten (8,13) und der dritten und vierten Eckversteifungsplatten (10,14) der viskosen Vibrationsdämpfungswand (1) und des Untergeschoßträgers (3); und Entfernen der temporären Aufhängungselemente (32).

## Revendications

1. Structure servant à installer une paroi d'amortissement de vibrations à viscosité (1) et incluant ladite paroi d'amortissement de vibrations à viscosité (1), dans laquelle la paroi d'amortissement de vibrations à viscosité (1) comprend un boîtier (25) à extrémité supérieure ouverte, une plaque intermédiaire (18) qui est insérée dans ledit boîtier (25), et un matériau visqueux ou un matériau viscoélastique qui est placé dans un espace situé entre le boîtier (25) et la plaque intermédiaire (18), ledit boîtier comportant une plaque de base (6), deux plaques latérales en acier (24) placées debout sur ladite plaque de base (6) et une paire de plaques formant bride (9) placées de chaque côté de ladite paire de plaques latérales (24), ladite structure comprenant en outre une poutre d'étage inférieur (3), une poutre d'étage supérieur (4) et une première plaque formant gousset (17), ladite plaque de base (6) étant munie, dans sa partie centrale, de parties à trou (26) destinées à recevoir des boulons haute résistance pour la connexion de la plaque de base à une bride de ladite poutre d'étage inférieur (3), ladite bride de ladite poutre d'étage inférieur (3) étant munie de parties à trou en regard desdites parties à trou (26) de ladite partie centrale de ladite plaque de base (6), pour recevoir lesdits boulons haute résistance, ladite paroi d'amortissement de vibrations à viscosité (1) étant connectée à ladite poutre d'étage inférieur (3) par les boulons haute résistance logés dans des parties en regard parmi lesdites parties à trou (26) de la plaque de base (6) et lesdites parties à trou de la bride de la poutre d'étage inférieur (3), et ladite paroi d'amortissement de vibrations à viscosité (1) étant connectée à ladite poutre d'étage supérieur (4) en connectant ladite plaque intermédiaire (18) et ladite première plaque formant gousset (17), ladite première plaque formant gousset (17) étant fixée à une bride de ladite poutre d'étage supérieur (4) au moyen d'une connexion boulonnée haute résistance à frottement à un plan ou d'une connexion boulonnée haute résistance à frottement à deux plans, **caractérisée en ce que** la structure comprend en outre une paire de deuxièmes plaques formant gousset (8), une paire de troisièmes plaques formant gousset (10), des quatrièmes plaques formant gousset (13) et des cinquièmes plaques formant gousset (14), ladite plaque de base (6) de ladite paroi d'amortissement de vibrations à viscosité (1) comportant de chaque côté d'un groupe desdites parties à trou (26) de la plaque de base (6) ladite paire de deuxièmes plaques formant gousset (8), ladite paire de deuxièmes plaques formant gousset (8) étant suspendue dans la même direction que celle de ladite plaque intermédiaire (18) depuis ladite plaque de base (6) jusqu'à une position située à une petite distance de celle-ci, **en ce que** ladite paire de plaques formant bride (9) ont respectivement une plaque de ladite paire de troisièmes plaques formant gousset (10), ladite paire de troisièmes plaques formant gousset (10) étant disposée orthogonalement à ladite plaque intermédiaire (18) et suspendue dans la même direction que celle de ladite plaque intermédiaire (18) depuis ladite plaque formant bride (9) jusqu'à la position située à la petite distance de ladite plaque de base (6), **en ce que** lesdites quatrièmes plaques formant gousset (13) sont en regard desdites deuxièmes plaques formant gousset (8) suspendues à ladite plaque de base (6) et lesdites cinquièmes plaques formant gousset (14) sont en regard desdites troisièmes plaques formant gousset (10) suspendues auxdites plaques formant bride (9), lesdites quatrièmes plaques formant gousset (13) et lesdites cinquièmes plaques formant gousset (14) étant incorporées à ladite poutre d'étage inférieur (3) de chaque côté desdites parties à trou de ladite bride de ladite poutre d'étage inférieur (3), et **en ce que** ladite paroi d'amortissement de vibrations à viscosité (1) est connectée à ladite poutre d'étage inférieur (3) en connectant lesdites deuxièmes plaques formant gousset (8) suspendues à ladite plaque de base (6) et lesdites quatrièmes plaques formant gousset (13) en regard desdites deuxièmes plaques formant gousset (8) suspendues à ladite plaque de base (6) et incorporées à ladite poutre d'étage inférieur (3) et en connectant lesdites troisièmes plaques formant gousset (10) suspendues auxdites plaques formant bride (9) et lesdites cinquièmes plaques formant gousset (14) en regard desdites plaques formant gousset (10) suspendues auxdites plaques formant bride (9) et incorporées à ladite poutre d'étage inférieur (3).

2. Structure servant à installer une paroi d'amortissement de vibrations à viscosité (1) selon la revendication 1, dans laquelle ladite plaque de base (6) de ladite paroi d'amortissement de vibrations à viscosité (1) comporte dans sa partie centrale un élément de jonction (7) destiné à être connecté à ladite bride de ladite poutre d'étage inférieur (3), et ledit élément de jonction (7) est pourvu desdites parties à trou (26) pour recevoir les boulons haute résistance.

3. Structure servant à installer une paroi d'amortissement de vibrations à viscosité (1) selon la revendication 2, dans laquelle ledit élément de jonction (7) placé dans ladite partie centrale et pourvu desdites parties à trou (26) pour recevoir les boulons haute résistance et ladite paire de deuxièmes plaques formant gousset (8) suspendue à ladite plaque de base (6) sont formés d'un seul tenant.

4. Structure servant à installer une paroi d'amortissement de vibrations à viscosité (1) selon la revendication 1, dans laquelle ladite plaque de base (6) de ladite paroi d'amortissement de vibrations à viscosité (1) est agencée de telle manière que ladite plaque de base (6), de chaque côté de ladite partie centrale, où lesdites deuxièmes plaques formant gousset (8) sont suspendues, est élevée vers ladite poutre d'étage supérieur (4) par rapport à ladite partie centrale munie desdites parties à trou (26) pour recevoir lesdits boulons haute résistance, afin d'être respectivement munie de marches.

5. Structure servant à installer une paroi d'amortissement de vibrations à viscosité (1) selon l'une quelconque des revendications 1 à 4, dans laquelle la connexion desdites plaques formant gousset est effectuée uniquement entre chacune desdites deuxièmes plaques formant gousset (8) suspendues à ladite plaque de base (6) et chacune desdites quatrièmes plaques formant gousset (13) incorporées dans ladite poutre d'étage inférieur (3) et en regard desdites deuxièmes plaques formant gousset (8) suspendues à ladite plaque de base (6).

6. Structure servant à installer une paroi d'amortissement de vibrations à viscosité (1) selon l'une quelconque des revendications 1 à 5, dans laquelle une plaque d'élévation métallique (11) est installée sur ladite bride de ladite poutre d'étage inférieur (3), et est munie de parties à trous de connexion de plaque de base.

7. Structure servant à installer une paroi d'amortissement de vibrations à viscosité (1) selon l'une quelconque des revendications 1 à 6, dans laquelle chacune desdites deuxièmes plaques formant gousset (8) suspendues à ladite plaque de base (6) est connectée à chacune desdites quatrièmes plaques formant gousset (13) incorporées dans ladite poutre d'étage inférieur (3) et en regard desdites deuxièmes plaques formant gousset (8) suspendues à ladite plaque de base (6) au moyen d'une connexion boulonnée haute résistance à frottement à un plan.

8. Structure servant à installer une paroi d'amortissement de vibrations à viscosité (1) selon l'une quelconque des revendications 1 à 7, dans laquelle chacune desdites troisièmes plaques formant gousset . (10) suspendues auxdites plaques formant bride (9) est connectée à chacune desdites cinquièmes plaques formant gousset (14) incorporées dans ladite poutre d'étage inférieur (3) et en regard desdites plaques formant gousset (10) suspendues auxdites plaques formant bride (9) au moyen d'une connexion boulonnée haute résistance à frottement à un plan.

9. Structure servant à installer une paroi d'amortissement de vibrations à viscosité (1) selon l'une quelconque des revendications 1 à 8, dans laquelle chacune desdites deuxièmes plaques formant gousset (8) suspendues à ladite plaque de base (6) est connectée à chacune desdites quatrièmes plaques formant gousset (13) incorporées dans ladite poutre d'étage inférieur (3) et en regard desdites plaques formant gousset (8) suspendues à ladite plaque de base (6) au moyen d'une connexion boulonnée haute résistance à frottement à deux plans utilisant une paire de plaques d'assemblage.

10. Structure servant à installer une paroi d'amortissement de vibrations à viscosité (1) selon l'une quelconque des revendications 1 à 9, dans laquelle chacune desdites troisièmes plaques formant gousset (10) suspendues auxdites plaques formant bride (9) est connectée à chacune desdites cinquièmes plaques formant gousset (14) incorporées dans ladite poutre d'étage inférieur (3) et en regard desdites troisièmes plaques formant gousset (10) suspendues auxdites plaques formant bride (9) au moyen d'une connexion boulonnée haute résistance à frottement à deux plans utilisant une paire de plaques d'assemblage.

11. Structure servant à installer une paroi d'amortissement de vibrations à viscosité (1) selon l'une quelconque des revendications 1 à 10, dans laquelle ladite plaque intermédiaire (18) est connectée à ladite première plaque formant gousset (17) fixée à et suspendue à ladite poutre d'étage supérieur (4) au moyen d'une connexion boulonnée haute résistance à frottement à deux plans utilisant une paire de plaques d'assemblage (19).

12. Structure servant à installer une paroi d'amortissement de vibrations à viscosité (1) selon la revendication 11, dans laquelle chacune desdites plaques d'assemblage (19) est divisée en une partie centrale et une paire de partie latérales.

13. Procédé d'installation appliqué à la structure servant à installer une paroi d'amortissement de vibrations à viscosité (1) selon l'une quelconque des revendications 1 à 12, comprenant les étapes consistant à :
fixer ladite poutre d'étage inférieur (3) à une paire de piliers (2, 2) disposés de chaque côté de celle-ci, ladite poutre d'étage inférieur (3) étant construite de telle manière que ladite bride est munie desdites parties à trou destinées à recevoir des boulons haute résistance pour la connexion à ladite plaque de base (6), et ladite paire de quatrièmes plaques formant gousset (13) en regard de ladite paire de deuxièmes plaques formant gousset (8) suspendues à ladite plaque de base (6) de chaque côté dudit groupe desdites parties à trou (26) pour recevoir des boulons haute résistance ainsi que ladite paire de cinquièmes plaques formant gousset (14) en regard de ladite paire de troisièmes plaques formant gousset (10) respectivement suspendues à ladite paire de plaques formant bride (9) sont incorporées dans ladite poutre d'étage inférieur (3) ;
poser en une position prédéterminée ladite poutre d'étage supérieur (4) à laquelle est intégrée ladite paroi d'amortissement de vibrations à viscosité (1) en connectant ladite plaque intermédiaire (18) de ladite paroi d'amortissement de vibrations à viscosité (1) à ladite première plaque formant gousset (17) placée sur un support et en connectant ledit boîtier (25) à ladite poutre d'étage supérieur (4) au moyen d'une paire de pièces de suspension temporaire (32) ;
connecter des parties en regard parmi lesdites parties à trous (26) destinées à recevoir des boulons haute résistance et des plaques en regard parmi lesdites deuxièmes et quatrièmes plaques formant gousset (8, 13) et lesdites troisièmes et cinquièmes plaques formant gousset (10, 14) de ladite paroi d'amortissement de vibrations à viscosité (1) et ladite poutre d'étage inférieur (3) ; et
retirer lesdites pièces de suspension temporaire (32).
